# EUROPEAN PATENT SPECIFICATION

(11) **EP 1 065 484 B1**
(45) Date of publication and mention of the grant of the patent: **12.04.2006**
(21) Application number: 00305526.6
(22) Date of filing: 30.06.2000
(51) Int. Cl.: G01J 5/08

(54) **Measuring or treatment instrument with laser sighting**
Laser-Visiergerät enthaltendes Mess- oder Behandlungsinstrument
Instrument de mesure ou de traitement comportant une visée laser

(30) Priority: 02.07.1999 US 142070 P; 03.08.1999 US 147021 P; 17.09.1999 US 154591 P; 28.02.2000 US 185385 P; 19.04.2000 US 198384 P
(43) Date of publication of application: 03.01.2001
(73) Proprietor: White Box, Inc., Stamford, CT 06907 (US)
(72) Inventor: Hollander, Milton Bernard, Stamford, Connecticut 06903 (US)
(74) Representative: Warren, Anthony Robert

(56) References cited:
- EP-A- 0 458 200
- DE-C- 3 710 486
- US-A- 4 315 150
- US-A- 5 524 984

## Description

### BACKGROUND OF THE INVENTION

### FIELD OF THE INVENTION

The invention relates to the field of hand-held measuring instruments such as for example instruments for measuring the temperature of a surface at a distance, which utilise a laser-generated aiming beam projected from the measuring instrument for the purpose of striking a surface or other target and thereby indicating to the user that the instrument is properly aligned for measurement or treatment.

It is known in the art of laser-aimed measuring instruments to project a single, i.e. central, laser beam from the instrument to create a spot of laser light on the target at a desired point of the area of the target under investigation or treatment.

It is also known in the art of laser-aimed measuring and treatment instruments to utilise a beam splitting means which causes a single laser beam, generated within the measuring or treatment instrument, to be split into a plurality of beams which are, for example, equally spaced about a central axis and at the same radius from the axis, so that a plurality of light spots are formed on the target and can serve to outline an area of the target which is under investigation. When a single central laser beam is utilised for the production, by splitting, of a plurality of spaced beams to form a pattern on a target, there is a difficulty of the beams after splitting becoming very much reduced in intensity with respect to the intensity of the single laser beam before it is subsequently split, e.g as by a conventional beam splitter device or a diffraction splitter such as a grating. Thus, a single central beam may well be sufficient in intensity to illuminate only a central spot on a target at a selected distance, but if that same single laser beam is split into, for example, twelve fractional beams intended for producing a pattern of spots of light on the target, the intensity of each of those fractional beams will be only about one twelfth of that of the single central beam. Thus, at a comparable distance from the measuring instrument, the fractional beams may be difficult or impossible to be seen by the user of the instrument. An advantage of a single beam of high intensity is that it is easily seen and directed, but may be too bright to be safe for the eye. Multiple beams are safer and less bright and form a useful pattern of spots, but may be too dim.

JP-A-08122701 discloses a laser pointer incorporating a turnable head carrying optical gratings which may be selectively moved into the optical path of a laser diode, to project different desired display patterns of light spots.

The present invention is directed to a laser beam sighting means, and to a method of operating a laser beam sighting means, generally as disclosed in the latter JP-A, and as defined in the preambles of claims 1 and 19 respectively.

### OBJECTS OF THE INVENTION

An object of the invention to provide an improved laser aiming, guiding or sighting means, for use in conjunction with a measuring or treatment instrument. This permits changing the production of beams of the laser device from a smaller number of beams to a larger number of beams, and vice versa. This smaller number of beams are each of relatively greater intensity than the larger number of beams and permit the user of the instrument to see where the beams are striking the target more clearly because of their relatively greater intensity. He may then subsequently utilize the larger number of beams to locate or outline a desired area of the target more precisely. The general location of that area of the target is known to the user, even if the illumination of the larger number of beams is considerably fainter, because the user will first have had the advantage of seeing the target area pinpointed by the smaller number of beams.

Another object of the invention is to provide a laser beam generating means, for use in conjunction with a measuring or treatment instrument, which permits changing the beam production from a first state in which there is a single central beam, of relatively greater intensity, to a second state in which there is a plurality of fractional beams, of relatively lesser intensity, for example to outline an area of a target, and, for example, also to include an additional central beam within the outline.

Yet another object of the invention is to provide beam changing means which are readily operable by the user of the instrument for selecting at will the number or pattern of beams being projected.

Yet another object of the invention is to provide in a hand-held device an arrangement including beam splitter means which are readily movable at the will of the user for placing into and out of the line of a single laser beam.

Yet another object of the invention is to provide the combination of a measuring or treatment instrument and laser beam projecting means having the characteristics set forth in the foregoing objects.

### SUMMARY OF THE INVENTION

According to a first aspect of the invention there is provided a laser light beam sighting means as defined in the characterizing clause of claim 1.

According to a second aspect of the invention there is provided a hand-held measuring or treatment instrument, for example an instrument (pyrometer) for measuring the temperature of a target situated at a distance from the measuring instrument, which includes a laser beam sighting means as set forth in the preceding paragraph.

According to one embodiment, means are provided for the front end of the laser beam generating instrument, for example a pyrometer, for varying the nature of the beam emitted, which means are manufactured as an attachment in the form of a separate entity which can be mounted removably on the instrument, so as for example to be attachable and detachable (for example as a self-tapping thread) as and when desired, and so that attachments with different beam-varying properties may be selected and utilised as required. The attachments may conveniently have relatively movable portions, for example in the form of a slideway, for mounting on the instrument, and a slide movable in the slideway into respective positions in which different forms or degrees of modification of the laser beam are obtained.By way of example, such a movable portion may have positions in which it presents respectively a simple opening or a beam splitter in the path of the laser beam, or again in which it presents a beam attenuator and a beam splitter in the path of the beam. In a further feature, the movable portion of the attachment may serve to actuate switching means, on the instrument, arranged to vary the strength of the laser beam appropriately.

In a further embodiment, the attachment provides selective production of, for example, a single central beam of relatively higher power, for aiming at a target to permit accurate sighting on a selected area of the target, combined with a plurality of other or split beams directed at the target for outlining an area thereof, or for producing a pattern of spots on the target. In a further form, the plurality of beams may be shifted from time to time, say in a circle, so as more clearly to outline a selected area of the target. In yet another form, the attachment provides projection of split beams which strike the target as a closed loop figure, such as a circle. In yet another arrangement, the attachment is arranged to divert a single laser beam to strike successive plural points on a target so as effectively to outline an area thereof, and preferably with a rapidity sufficient to result in persistence of vision giving the impression of a full illumination of the line of successive points.

The sighting means embodying the invention may be provided with means for the timed duration of the projection of each selection of beams.

Means may be provided for automatic alternation of two or more kinds of aiming beam projection, such that the user has the target area continuously and repetitively illuminated respectively by the brighter single central beam and the plurality of fractional beams defining an area of the target.

The instrument may be provided with a switching means, serving to change the beam projection from a lesser number of beams to a greater number of beams or vice versa, and serving to cause a projection of a number of beams which produce a desired pattern, which may be varied at the will of the user, or from time to time automatically, or both, on a target area.

The instrument may permit aiming, guiding, and sighting of a beam or beams for purposes other than temperature sensing purposes, such as for treatments or decorative and/or entertaining purposes, or activation of apparatus as a signaling means.

According to a further aspect of the present invention, there is provided a method of operating a laser beam sighting means as defined in the characterizing clause of claim 19.

In the drawings:
Figure 1 is a perspective elevation of a measuring instrument, for example a pyrometer, utilised for measuring, at a distance, the temperature of a selected area of a target;
Figure 1A is a perspective elevation of a measuring instrument, corresponding to that shown in Figure 1, seen with part omitted and part in section to reveal internal details;
Figure 2 is a diagram to show a single central light spot which is produced in one aiming phase of operation of a beam-changing device on the measuring instrument, and also a circle of twelve circumferentially spaced light spots, of lesser intensity, produced during another aiming phase of operation of the beam-changing device;
Figure 3 is a schematic elevation of a laser light projector which can be made to project either or both together a single beam, for location of a target, and/or a plurality of beams for creating a light distribution pattern or design on the target;
Figures 4 and 4A are respectively a side elevation of a laser light projector, and a front elevation of a target therefor, in which the projector can be made to project both a single beam for location of a "center" on a target, and a plurality of beams for operation of a locking system;
Figures 5 and 5A are respectively a side elevation of a laser light projector, and a front elevation of a target therefor, in which the projector can be made to project a centering beam and/or a plurality of beams for providing a pattern on the target, say a theatrical stage;
Figure 6 is a schematic elevation of a laser light projector which is used in surgical, dental, and medical fields for accurate aiming for cutting, healing, and other curative purposes; and
Figures 7A,7B,7C and 7D are box diagrams to illustrate methods of carrying out the invention.

### DETAILED DESCRIPTION OF THE DRAWINGS

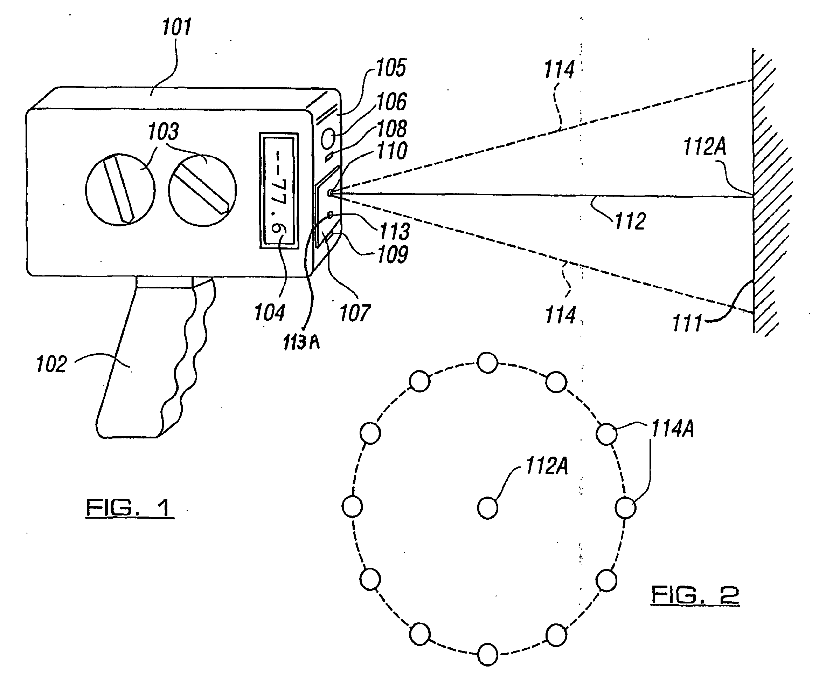

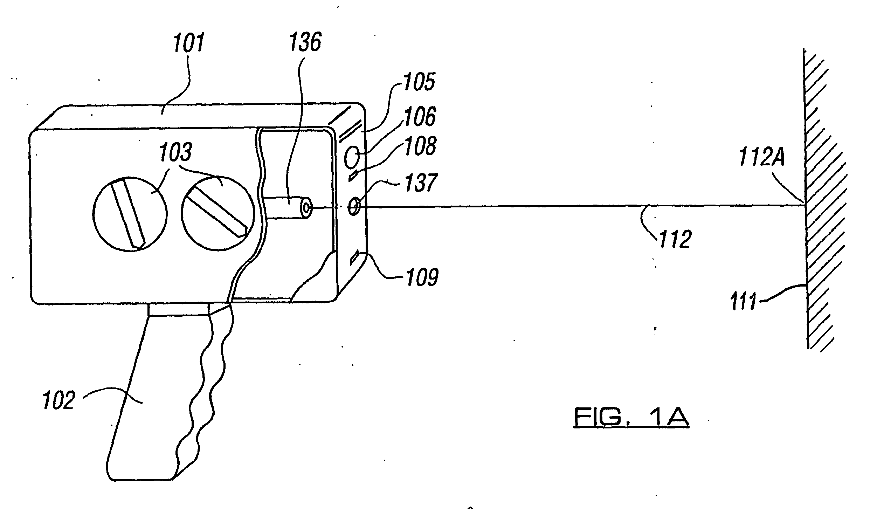

In Figures 1 and 1A of the drawings there is shown a preferred embodiment and best mode of practicing this invention in which a temperature measuring instrument (pyrometer), designated generally by reference numeral 101, is intended for pointing at a target 111 so as to determine,without contact, at a distance, the temperature of a selected target area. The hand held instrument has a handle 102, selector switches 103 for changing ranges of readings, and a digital readout screen 104 to indicate temperature.This is suitable for single hand operation. At the front end 105 of the instrument there is provided a heat-sensitive device 106 which includes means for detecting radiation from the target area on a heat-sensitive element (not shown) within the instrument. Also on the front end 105 there is provided an outlet 137 for a laser beam 112 produced by a laser beam projector 136 located within or upon the instrument. Over the outlet 137 there is positioned a slide 107, and stops 108 and 109 on the front end of the housing limit the movement of the slide in an up and down direction. In the slide 107 there is a first aperture 110 which, when aligned with the beam projector 136, permits a single central beam 112,of relatively high intensity, to be projected towards the target 111 to strike it at 112A.

In the slide 107 there is a second aperture 113 which incorporates a beam splitter 113A serving to split the single beam into twelve radial fractional beams 114 spaced evenly and circumferentially where they strike the target 111 at 114A.

The slide 107 is arranged to be easily movable into register with the outlet 137 by the user of the measuring instrument, say by one finger of a single hand holding the instrument.

In another embodiment, not illustrated, the slide 107 is replaced by a beam splitter which can be hinged or rotated into position over the laser beam outlet 137, or can be arranged to slide into and out of position, or is held in position by fastening means providing a clip-on or screw-on action.

In a further embodiment, movement of the slide or other carrier for the beam splitter is obtained mechanically or electrically, as distinct from the manual form shown. A range of different beam splitters may be selected from storage, as with bits for a drill, and may produce different patterns or brightness and may be clipped into position.These may produce a central beam 112 together with several fractional beams 114. The beam splitter, in a further embodiment,has provision for providing a plurality of fractional beams 114, whilst at the same time providing also a single central beam 112, to be used for aiming purposes, which single central beam 112 if required may be lessened in intensity to avoid danger to people.

In a still further embodiment, changing of the beam-splitter means from single beam to multiple beams is obtained automatically on a timed basis, either as a one-off operation,or as a repetitive operation, so that in the latter case the user of the instrument will have an automatic change-over from a single central beam, for correct aiming, to multiple beams for defining the target area. In a yet further embodiment the timed basis is made variable at the choice of the user of the instrument.

In a further embodiment, the relative lengths of the timings of the single-beam operation and of the multiple-beam operations are different, e.g. short single beam-operation for aiming, followed by a relatively longer multiple-beam operation.

In yet another embodiment, provision is made for spring-loading the beam-changing means into a rest position, i.e. normally to provide multiple-beam operation, but movable when desired so as temporarily to show the single aiming beam operation.

In yet another embodiment, the variation of the projection of the laser beam is to provide patterns other than a plurality of dots, for example a circle of laser illumination or a rectangle.

In yet another embodiment, the beam varying means provides a projection of information onto the target area, e.g. technical information, or advertising information.

The invention is particularly useful for varying the brightness in circumstances where the ambient light on the target would make it difficult, or impossible, to see a pattern of individual laser light spots hitting the target area.

In yet another embodiment the device which serves to change the nature of the laser beam has more than two settings, and is for example of a rotary nature, and in a preferred embodiment is in the form of a knurled disc or turret for ease of operation with the finger.

In further embodiments, substitutable heads are provided, each having different combinations of single and multiple spot configuration, and different beam brightness. In another embodiment the switch or other control which serves to change the nature of the laser beam projection is a so-called "flip" switch, and in yet another embodiment the means for changing the laser beam projection is a series of optical devices disposed on a rotatable turret. Detachable devices may be used.

In other embodiments, the pattern of laser light serving to define an area of the target is a continuous group of two or more such radially spaced concentric patterns, continuous or interrupted, defining for example an inner area and one or more outer areas of the target.

In a still further embodiment the means for determining the nature of the laser light aimed at the target is carried by a removable member, e.g. a snap-on or screw-on fitting for mounting on the body of the measuring instrument.

A primary use of the device of this invention is with a battery-powered hand-held measuring instrument intended for use in one hand.

In all instances referred herein involving the production of a plurality of fractional beams, there may also be provided at the same time a single central beam to assist in aiming of the instrument.

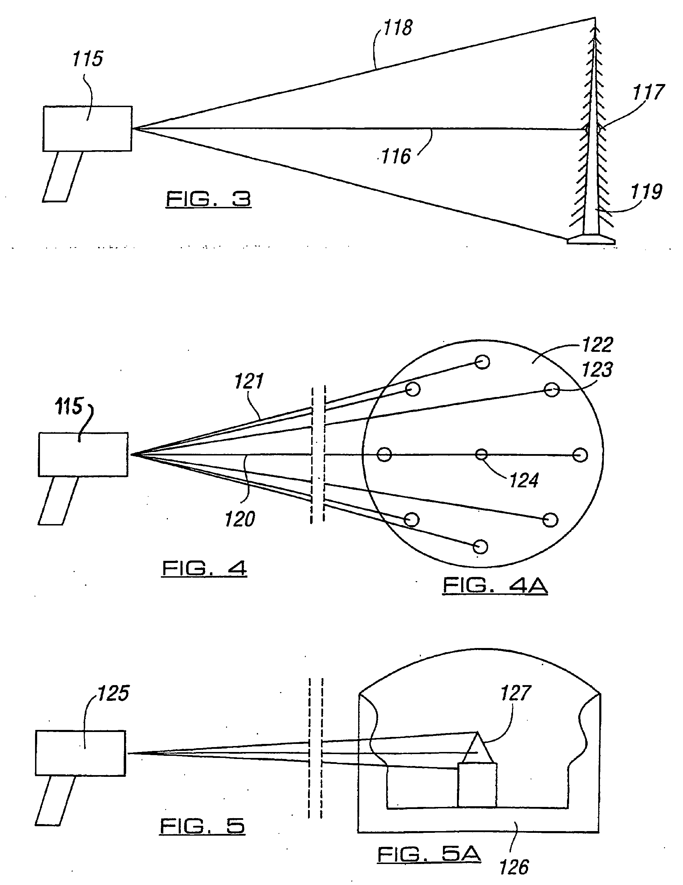

Referring to Figure 3 of the drawings a laser beam projector 115, for example of the kind described with reference to Figure 1, and here shown only schematically at 115, is arranged to project, at the will of the user, either a single central beam 116 which can be used to aim the projector in correct alignment with a central target 117, or then changed by switching to provide a plurality of beams which are designated collectively as 118, which produce a pattern 119 on the target, e.g. the simple tree shape shown.

Referring to Figures 4 and 4A of the drawings a laser beam projector 115, for example similar to the hand-held device shown in Figure 1 is arranged to project selectively both a single central beam 120 for aiming and centering purposes with a plurality of spaced beams 121 arranged in a circle, or any other desired pattern. The projector is intended for use in operating a switching or locking and unlocking system, say for example a television set or a garage door.On the door, or adjacent to it, there is provided a receptor 122 having a plurality of light-sensitive switches 123 arranged in a circle or other pattern corresponding to the pattern of the projector.The user of the projector, say a driver in a car, aims the projector, using the single brighter central beam, at a center 124 of the receptor 122 and then switches the projector to multiple-beam operation,so that each of the switches receives an individual beam, causing the garage door to be unlocked. Different lesser numbers of the multiple beams are used, and changed from time to time, so that the user has a "combination" lock which can be varied for greater security.

Referring to Figures 5 and 5A of the drawings, a projector 125, capable of producing both a single central beam for aiming purposes, and also a plurality of beams, serves to permit accurate aiming of laser light in a single beam to position the projector relative to a theatrical stage 126 by aiming at a central point on a part of the stage, and then at the will of the operator can project a pattern 127 say of a human figure or of a "ghost", at the desired point of the stage.

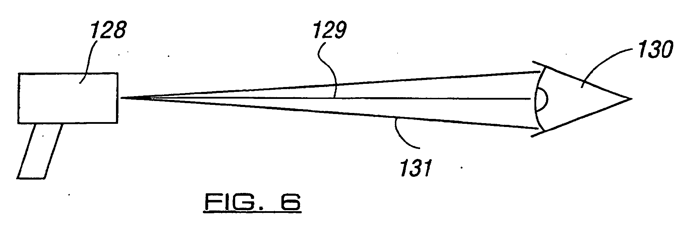

Referring to Figure 6 of the drawings, a projector 128 is capable of producing a single stronger laser light beam for centering and/or treatment purposes, and also a plurality of individual identification beams which are distinct or merge to strike a defined area.The single beam 129 is aimed for example at a center point of an area to be treated, say a human eye 130 or a tooth or skin lesion, after the projector has been switched to produce a plurality of beams 131 to serve for identification of the area which they cover.

In each of the examples described with reference to Figures 3 to 6, it will be seen that the single central beam, or a plurality of relatively stronger beams, are used for general aiming or treatment purposes, and that the plurality of relatively weaker beams are used to provide a desired identification result on a target.

Splitting of a single laser beam, used for example for centering and aiming purposes, into a plurality of subordinate beams, used for any of the purposes described above, may conveniently be obtained by means of a diffraction grating form of beam splitter, but other forms of beam splitter, such as multiple mirrors, may be used.

In a preferred embodiment the changeover from a single central aiming beam to a plurality of subordinate beams is obtained at a time and rate automatically by a selected timed sequencing arrangement in the projector,with the timing and sequencing made adjustable as required,for example,by insertion of preprogrammed units into a receptor of the projector.

In a further embodiment provision is made to compensate for the relative weakening of the subordinate beams by arranging that the intensity of the "main" single beam is stepped up appropriately at the time of changing from single to multiple beam operation,and preferably but not necessarily by the factor of the number of the subordinate beams obtained.

Where a pattern of, say,twelve or sixteen "spots" is obtained by the use of a beam splitter, there will be a corresponding lessening or attenuation of the intensity of the subordinate beams by approximately that same numerical factor.In order to permit the use of relatively smaller, and cheaper, lasers, the subdivision of the single aiming beam, in a still further embodiment, is reduced to a much smaller figure, say only six subordinate beams, with at the same time a change of aiming of the subordinate beams on a regular timed or pulsed basis.

For example,where twelve "spots" are required on a target, the laser projector provides only six subordinate beams but projects the group of beams alternately in a first position and then in a second position, or in rotated sequential positions angularly changed from the first position, so that the user has the illusion of twelve "spots" being maintained.

In all of the embodiments described above wherein there is a changeover from a single (or multiple) aiming beam to a plurality of subordinate beams which define or outline an area or a pattern, the laser projecting means are arranged, in a further embodiment, to carry out mechanically or electronically the changeover at a relatively very rapid rate, say twelve or more times per second, so that the strength of the beam can be at its full power, without diminution according to the number of circumferential "spots" or the pattern to be produced, and persistence of vision will enable the user to see the "spots" or pattern at apparently full laser strength.

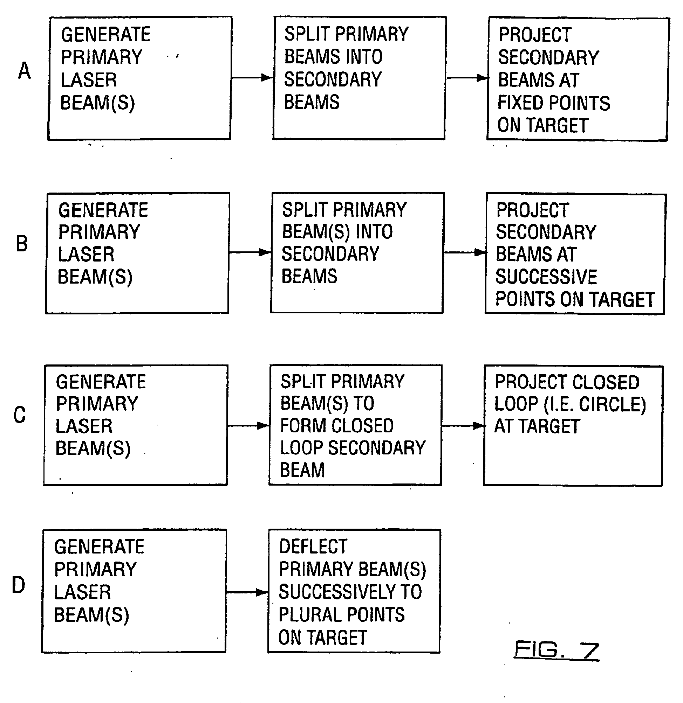

Referring now to Figures 7A,7B,7C and 7D there are shown a number of methods of carrying out the invention.

In Figure 7A a single primary beam (or a relatively small number of primary beams) is or are generated, and the or each primary beam is then split into a number of secondary beams which are then projected to strike the target at predetermined fixed points (i.e. small areas) of the target.

In Figure 7B a single primary beam (or more than one) is or are generated and the or each primary beam is then split into a number of secondary beams which are then projected so as to strike the target at successive points of the target.

In Figure 7C a single primary beam (or more than one) is or are generated and the or each primary beam is formed into a closed loop secondary beam, such as a circle, and the or each secondary beam is projected so as to strike the target. Where more than one such closed loop secondary beam is formed, e.g. circles, there may be one within another, e.g. concentric.

In Figure 7D a single primary beam (or more than one) is or are generated, and the or each primary beam is deflected successively to each of a number of small areas of the target, and particularly at a high rate sufficient to give rise to persistence of vision.

In each of the above described methods, the primary beam, or beams, generated in the first box of the respective Figure 7A,7B,7C or 7D is firstly directed at the target for aiming purposes, whereas the secondary beams generated in Figures 7A,7B and 7C, and the primary beam(s) of Figure 7D, strike the target so as to outline an area of the target.

In each of the methods described with reference to Figures 7A,7B,7C and 7D the pattern or number of small areas, or plural closed loop figures, defined on the target may be made subject to variation in number and/or shape, at the will of the user, so as to result in a form of "coding", for example when the target has areas sensitive to laser light and certain ones of which need to be exclusively activated for operation of a mechanism such as a lock or machinery activator.

An aiming beam or beam array is useful in directing medical/surgical/dental equipment for precise treatment or manipulation of remote body areas. These include lasers, X-rays,ultrasound, diathermy,cutting/drilling tools,cautery, and injection tools.

Precision material treatment tools, e.g for drilling, cutting, burning, welding, and soldering, may also be directed by visible laser light location, either manually or automatically.

## Claims

1. A laser beam sighting means comprising the combination of: (a) means (136) for generating at least one primary laser beam (112; 116; 120;129) for directing towards a location area (112A; 124; 132) of a target surface (111; 119; 135); (b) means (113A) for subdivision of said at least one primary laser beam into more than two subdivision secondary beams (114; 118; 121;131) of lesser intensity than said at least one primary laser beam, for directing towards respective areas of said target surface spaced laterally from and bounding said location area, for indicating on said target surface a required zone, and (c) means (107) for changing selectively between a display of the at least one primary beam and a display of the secondary beams on the target surface,
**characterised in that** the laser beam sighting means is a sighting means for use in conjunction with instruments, and **in that** said means (107) for changing between the primary and secondary beams includes a movable member having a first position in which it presents a beam attenuator in the path of the at least one primary beam, and a second position in which it presents said subdivision means (113A) in the path of the at least one primary beam.

2. A laser beam sighting means, as claimed in claim 1, wherein said subdivision means (113A) comprises means for varying the number of secondary beams produced.

3. A laser beam sighting means, as claimed in claim 1, wherein said subdivision means (113A) is arranged to operate at successive periods separated by time intervals such that the target surface is illuminated altemately by the at least one primary beam, and by the secondary beams.

4. A laser beam sighting means, as claimed in claim 1, wherein said subdivision means (113A) is arranged to direct said secondary beams to define at least one pattern on the target surface.

5. A laser beam sighting means, as claimed in claim 4, wherein said at least one pattern is a pattern of laser light spots.

6. A laser beam sighting means, as claimed in claim 4, wherein said at least one pattern is a closed loop of laser light.

7. A laser beam sighting means, as claimed in claim 4, 5 or 6, wherein said subdivision means (113A) is arranged to direct said secondary beams sequentially to define each of a plurality of patterns on the target surface.

8. A laser beam sighting means, as claimed in any preceding claim, wherein said subdivision means (113A) comprises beam splitter means.

9. A laser beam sighting means, as claimed in claim 8, wherein said beam splitter means comprises a diffraction beam splitter.

10. A laser beam sighting means, as claimed in claim 8 or 9, wherein said movable member (107) is operable to move said beam splitter means (113A), with respect to said beam generating means (136), into and out of a position in which it is placed in the path of said at least one primary beam (112; 116; 120; 129).

11. A laser beam sighting means, as claimed in claim 10, wherein said movable member (107) is operable to move said beam splitter means (113A) hingedly into and out of said position.

12. A laser beam sighting means, as claimed in claim 10, wherein said movable member (107) is operable to move said beam splitter means (113A) slidably into and out of said position.

13. A laser beam sighting means, as claimed in claim 10, wherein said movable member (107) is operable to move said beam splitter means (113A) rotatably into and out of said position.

14. A laser beam sighting means, as claimed in claim 10, wherein said movable member (107) is operable to move periodically said beam splitter means (113A) into and out of said position.

15. A laser beam sighting means, as claimed in claim 14, wherein said means for periodically moving said beam splitter means (113A) is arranged to place said beam splitter means into position for a relatively shorter time period, and to place said beam splitter means out of position for a relatively longer time period.

16. A laser beam sighting means, as claimed in claim 15, comprising means for varying the respective shorter and longer periods.

17. A laser beam sighting means, as claimed in any preceding claim, wherein said movable member (107) has a first position in which it presents an opening (113) in the path of the at least one primary beam, and a second position in which it presents said subdivision means (113A) in the path of the at least one primary beam.

18. A hand-held measuring or treatment instrument provided with a laser beam sighting means, as claimed in any preceding claim, said instrument including means for determining, at a distance, the temperature of said zone of said target surface.

19. A method of operating a laser beam sighting means which comprises steps of: (a) generating at least one primary laser beam (112; 116; 120; 129),(b) directing said at least one primary beam towards a first location area (112A; 124; 132) of a target surface (111; 119; 135), and (c) subdividing, by subdivision means (113A), said at least one primary beam into a greater number of secondary beams (114; 118; 121; 131) of lesser intensity than said at least one primary beam, thereafter (d) directing said secondary beams towards second respective areas of said target surface larger than, spaced from and bounding, said first location area; (e) selectively changing between a display of the at least one primary beam and a display of the secondary beams on the target surface,
**characterised in that** the subdivision means (113A) is carried by a movable member (107), and step (e) includes moving said member between a first position in which it presents a beam attenuator in the path of the at least one primary beam, and a second position in which it presents the subdivision means in the path of the at least one primary beam.

20. A method as claimed in claim 19, wherein step (d) includes directing said secondary beams successively towards said bounding areas.

21. A method as claimed in claim 19 or 20, wherein step (d) includes directing said secondary beams to define a pattern of laser light dots.

22. A method as claimed in claim 19 or 20, wherein step (d) includes directing said secondary beams to define a pattern comprising a closed loop of laser light on said target surface bounding said first location area.

23. A method as claimed in any of claims 19 to 22, wherein step (c) comprises splitting said at least one primary beam into said secondary beams by means of a diffraction beam splitter (113A).

24. A method as claimed in claim 23, wherein step (e) includes moving the diffraction beam splitter (113A) into and out of a position in which it is placed in the path of the at least one primary beam.

25. A method as claimed in any preceding claim, wherein step (e) includes moving said member (107) between a first position in which it presents an opening (113) in the path of the at least one primary beam; and a second position in which it presents the subdivision means (113A) in the path of the at least one primary beam.

## Revendications

1. Moyens de visée à faisceau laser comprenant la combinaison de : (a) moyens (136) pour générer au moins un faisceau laser principal (112 ; 116 ; 120 ; 129) pour le diriger vers une zone de localisation (112A ; 124 ; 132) d'une surface cible (111 ; 119 ; 135) ; (b) moyens (113A) pour subdiviser ledit au moins un faisceau laser principal en plus de deux faisceaux secondaires de subdivision (114; 118 ; 121 ; 131) d'une intensité plus faible que ledit au moins un faisceau laser principal, pour les diriger vers des zones respectives de ladite surface cible espacées latéralement de et limitant ladite zone de localisation, pour indiquer sur ladite surface cible une zone requise, et (c) moyens (107) pour procéder à un changement sélectif entre un affichage du au moins un faisceau principal et un affichage des faisceaux secondaires sur la surface cible,
**caractérisés en ce que** les moyens de visée à faisceau laser sont des moyens de visée destinés à être utilisés en conjugaison avec des instruments, et **en ce que** lesdits moyens (107) pour changer entre les faisceaux principal et secondaires comprend un élément mobile ayant une première position dans laquelle il présente un atténuateur de faisceau dans le trajet du au moins un faisceau principal, et une seconde position dans laquelle il présente lesdits moyens de subdivision (113A) dans le trajet du au moins un faisceau principal.

2. Moyens de visée à faisceau laser, selon la revendication 1, dans lesquels lesdits moyens de subdivision (1 13A) comprennent des moyens pour varier le nombre de faisceaux secondaires produits.

3. Moyens de visée à faisceau laser, selon la revendication 1, dans lesquels lesdits moyens de subdivision (113A) sont agencés pour fonctionner à des périodes successives séparées par des intervalles de temps de telle sorte que la surface cible soit éclairée en alternance par l'au moins un faisceau principal, et par les faisceaux secondaires.

4. Moyens de visée à faisceau laser, selon la revendication 1, dans lesquels lesdits moyens de subdivision (113A) sont agencés pour diriger lesdits faisceaux secondaires pour définir au moins un motif sur la surface cible.

5. Moyens de visée à faisceau laser, selon la revendication 4, dans lesquels ledit au moins un motif est un motif de spots de lumière laser.

6. Moyens de visée à faisceau laser, selon la revendication 4, dans lesquels ledit au moins un motif est une boucle fermée de lumière laser.

7. Moyens de visée à faisceau laser, selon la revendication 4, 5 ou 6, dans lequel lesdits moyens de subdivision (113A) sont agencés pour diriger lesdits faisceaux secondaires en séquence pour définir chacun une pluralité de motifs sur la surface cible.

8. Moyens de visée à faisceau laser, selon l'une quelconque des revendications précédentes, dans lesquels lesdits moyens de subdivision (113A) comprennent des moyens de séparation de faisceau.

9. Moyens de visée à faisceau laser, selon la revendication 8, dans lesquels lesdits moyens de séparation de faisceau comprennent un séparateur de faisceau de diffraction.

10. Moyens de visée à faisceau laser, selon la revendication 8 ou 9, dans lesquels ledit élément mobile (107) peut être actionné pour déplacer lesdits moyens de séparation de faisceau (113A), par rapport auxdits moyens de génération de faisceau (136), dans ou hors d'une position dans laquelle ils sont placés dans le trajet dudit au moins un faisceau principal (112 ; 116 ; 120 ; 129).

11. Moyens de visée à faisceau laser, selon la revendication 10, dans lesquels ledit élément mobile (107) peut être actionné pour déplacer lesdits moyens de séparation de faisceau (113A) de façon articulée dans ou hors de ladite position.

12. Moyens de visée à faisceau laser, selon la revendication 10, dans lesquels ledit élément mobile (107) peut être actionné pour déplacer lesdits moyens de séparation de faisceau (113A) de façon coulissante dans ou hors de ladite position.

13. Moyens de visée à faisceau laser, selon la revendication 10, dans lesquels ledit élément mobile (107) peut être actionné pour déplacer lesdits moyens de séparation de faisceau (113A) en rotation dans ou hors de ladite position.

14. Moyens de visée à faisceau laser, selon la revendication 10, dans lesquels ledit élément mobile (107) peut être actionné pour déplacer périodiquement lesdits moyens de séparation de faisceau (113A) dans ou hors de ladite position.

15. Moyens de visée à faisceau laser, selon la revendication 14, dans lesquels lesdits moyens de déplacement périodique desdits moyens de séparation de faisceau (113A) sont agencés pour placer lesdits moyens de séparation de faisceau en position pendant une période de temps relativement plus courte, et pour placer lesdits moyens de séparation de faisceau hors position pendant une période de temps relativement plus longue.

16. Moyens de visée à faisceau laser, selon la revendication 15, comprenant des moyens pour faire varier les périodes plus courte et plus longue respectives.

17. Moyens de visée à faisceau laser, selon l'une quelconque des revendications précédentes, dans lesquels ledit élément mobile (107) a une première position dans laquelle il présente une ouverture (113) dans le trajet du au moins un faisceau principal, et une seconde position dans laquelle il présente lesdits moyens de subdivision (113A) dans le trajet du au moins un faisceau principal.

18. Instrument de mesure ou de traitement portatif doté de moyens de visée à faisceau laser, selon l'une quelconque des revendications précédentes, ledit instrument comprenant des moyens pour déterminer, à une certaine distance, la température de ladite zone de ladite surface cible.

19. Procédé d'utilisation de moyens de visée à faisceau laser qui comprend les étapes consistant à : (a) générer au moins un faisceau laser principal (112 ; 116 ; 120 ; 129), (b) diriger ledit au moins un faisceau laser principal vers une première zone de localisation (112A; 124 ; 132) d'une surface cible (111 ; 119 ; 135), et (c) subdiviser, grâce à des moyens de subdivision (113A), ledit au moins un faisceau laser principal en un plus grand nombre de faisceaux secondaires (114 ; 118 ; 121 ; 131) d'une intensité plus faible que ledit au moins un faisceau laser principal, (d) diriger ensuite lesdits faisceaux secondaires vers des secondes zones respectives de ladite surface cible plus grandes que, espacées de et limitant ladite première zone de localisation ; (e) procéder à un changement sélectif entre un affichage du au moins un faisceau principal et un affichage des faisceaux secondaires sur la surface cible,
**caractérisé en ce que** les moyens de subdivision (113A) sont portés par un élément mobile (107), et l'étape (e) comprend le déplacement dudit élément entre une première position dans laquelle il présente un atténuateur de faisceau dans le trajet du au moins un faisceau principal, et une seconde position dans laquelle il présente les moyens de subdivision dans le trajet du au moins un faisceau principal.

20. Procédé selon la revendication 19, dans lequel l'étape (d) comprend la direction desdits faisceaux secondaires successivement vers lesdites zones de limite.

21. Procédé selon la revendication 19 ou 20, dans lequel l'étape (d) comprend la direction desdits faisceaux secondaires pour définir un motif de spots de lumière laser.

22. Procédé selon la revendication 19 ou 20, dans lequel l'étape (d) comprend la direction desdits faisceaux secondaires pour définir un motif comprenant une boucle fermée de lumière laser sur ladite surface cible limitant ladite première zone de localisation.

23. Procédé selon l'une quelconque des revendications 19 à 22, dans lequel l'étape (c) comprend la séparation dudit au moins un faisceau principal en lesdits faisceaux secondaires au moyen d'un séparateur de faisceau de diffraction (113A).

24. Procédé selon la revendication 23, dans lequel l'étape (e) comprend le déplacement du séparateur de faisceau de diffraction (113A) dans et hors d'une position dans laquelle il est placé dans le trajet du au moins un faisceau principal.

25. Procédé selon l'une quelconque des revendications précédentes, dans lequel l'étape (e) comprend le déplacement dudit élément (107) entre une première position dans laquelle il présente une ouverture (113) dans le trajet du au moins un faisceau principal, et une seconde position dans laquelle il présente les moyens de subdivision (113A) dans le trajet du au moins un faisceau principal.

## Patentansprüche

1. Laserstrahl-Visiermittel mit der Kombination aus: (a) Mitteln (136) zum Erzeugen von wenigstens einem primären Laserstrahl (112; 116; 120; 129), und zwar um diesen in Richtung auf einen Ortsbereich (112A; 124; 132) einer Zieloberfläche (111; 119; 135) zu richten; (b) Mitteln (113A) zum Unterteilen des wenigstens einen primären Laserstrahls in mehr als zwei unterteilte sekundäre Strahlen (114; 118; 121; 131) geringerer Intensität als der wenigstens eine primäre Laserstrahl, und zwar um diese in Richtung auf jeweilige Bereiche der Zieloberfläche zu richten, die lateral von dem Ortsbereich beabstandet sind und diesen umgrenzen, um so eine erforderliche Zone an der Zieloberfläche anzuzeigen; und (c) Mitteln (107) zum selektiven Wechseln zwischen einer Anzeige des wenigstens einen primären Strahls und einer Anzeige der sekundären Strahlen an der Zieloberfläche,
**dadurch gekennzeichnet, dass** die Laserstrahl-Visiermittel Visiermittel zur Verwendung in Verbindung mit Instrumenten sind und dass die Mittel (107) zum Wechseln zwischen dem primären und den sekundären Strahlen ein bewegliches Element beinhalten, und zwar mit einer ersten Position, in der das Element in dem Pfad des wenigstens einen primären Strahls einen Strahldämpfer präsentiert, und mit einer zweiten Position, in der das Element in dem Pfad des wenigstens einen primären Strahls Unterteilungsmittel (113A) präsentiert.

2. Laserstrahl-Visiermittel nach Anspruch 1, wobei die Unterteilungsmittel (113A) Mittel zum Variieren der Anzahl der erzeugten sekundären Strahlen beinhalten.

3. Laserstrahl-Visiermittel nach Anspruch 1, wobei die Unterteilungsmittel (113A) dazu ausgelegt sind, in aufeinanderfolgenden Zeitspannen zu arbeiten, die durch Zeitintervalle voneinander getrennt sind, derart, dass die Zieloberfläche abwechselnd mittels des mindestens einen primären Strahls und mittels der sekundären Strahlen beleuchtet wird.

4. Laserstrahl-Visiermittel nach Anspruch 1, wobei die Unterteilungsmittel (113A) dazu ausgelegt sind, die sekundären Strahlen so zu richten, dass wenigstens ein Muster auf der Zieloberfläche definiert wird.

5. Laserstrahl-Visiermittel nach Anspruch 4, wobei das wenigstens eine Muster ein Muster von Laserlichtpunkten ist.

6. Laserstrahl-Visiermittel nach Anspruch 4, wobei das wenigstens eine Muster eine geschlossene Schleife bzw. ein geschlossener Kreis aus Laserlicht ist.

7. Laserstrahl-Visiermittel nach Anspruch 4, 5 oder 6, wobei die Unterteilungsmittel (113A) dazu ausgelegt sind, die sekundären Strahlen sequenziell zu richten, um jedes einer Vielzahl von Mustern an der Zieloberfläche zu definieren.

8. Laserstrahl-Visiermittel nach einem der vorhergehenden Ansprüche, wobei die Unterteilungsmittel (113A) Strahlteilermittel aufweisen.

9. Laserstrahl-Visiermittel nach Anspruch 8, wobei die Strahlteilermittel einen Diffraktionsstrahlteiler aufweist.

10. Laserstrahl-Visiermittel nach Anspruch 8 oder 9, wobei das bewegliche Element (107) betriebsbereit ist, um die Strahlteilermittel (113A) in Bezug auf die Strahlerzeugungsmittel (136) in eine Position und aus einer Position heraus zu bewegen, in der sie in dem Pfad des wenigstens einen primären Strahls (112; 116; 120; 129) angeordnet sind.

11. Laserstrahl-Visiermittel nach Anspruch 10, wobei das bewegliche Element (107) betriebsbereit ist, um die Strahlteilermittel (113A) schwenkend in die Position und aus der Position heraus zu bewegen.

12. Laserstrahl-Visiermittel nach Anspruch 10, wobei das bewegliche Element (107) betriebsbereit ist, um die Strahlteilermittel (113A) gleitend bzw. verschiebend in die Position und aus der Position heraus zu bewegen.

13. Laserstrahl-Visiermittel nach Anspruch 10, wobei das bewegliche Element (107) betriebsbereit ist, um die Strahlteilermittel (113A) drehend in die Position und aus der Position heraus zu bewegen.

14. Laserstrahl-Visiermittel nach Anspruch 10, wobei das bewegliche Element (107) betriebsbereit ist, um die Strahlteilermittel (113A) periodisch in die Position und aus der Position heraus zu bewegen.

15. Laserstrahl-Visiermittel nach Anspruch 14, wobei die Mittel zum periodischen Bewegen der Strahlteilermittel (113A) dazu ausgelegt sind, die Strahlteilermittel für eine relativ kürzere Zeitspanne in der Position anzuordnen, und die Strahlteilermittel für eine relativ längere Zeitspanne außerhalb der Position anzuordnen.

16. Laserstrahl-Visiermittel nach Anspruch 15, mit Mitteln zum Variieren der jeweiligen kürzeren und längeren Zeitspanne.

17. Laserstrahl-Visiermittel nach einem der vorhergehenden Ansprüche, wobei das bewegliche Element (107) eine erste Position aufweist, in der es in dem Pfad des wenigstens einen primären Strahls eine Öffnung (113) präsentiert, und eine zweite Position aufweist, in der es in dem Pfad des wenigstens einen primären Strahls die Unterteilungsmittel (113A) präsentiert.

18. Hand-Mess- oder Hand-Behandlungsinstrument, das mit Laserstrahl-Visiermitteln nach einem der vorhergehenden Ansprüche ausgestattet ist, wobei das Instrument Mittel aufweist, um aus einer Entfernung die Temperatur der Zone der Zieloberfläche zu bestimmen.

19. Verfahren zum Betreiben eines Laserstrahl-Visiermittels, mit den Schritten: (a) Erzeugen wenigstens eines primären Laserstrahls (112; 116; 120; 129), (b) Richten des wenigstens einen primären Strahls hin auf einen ersten Ortsbereich (112A; 124; 132) einer Zieloberfläche (111; 119; 135), und (c) Unterteilen, und zwar mittels Unterteilungsmitteln (113A), des wenigstens einen primären Strahls in eine größere Anzahl von sekundären Strahlen (114; 118; 121; 131) geringerer Intensität als der wenigstens eine primäre Strahl, und hiernach (d) Richten der sekundären Strahlen in Richtung auf zweite jeweilige Bereiche der Zieloberfläche, die größer sind als der erste Ortsbereich, die beabstandet sind von dem ersten Ortsbereich und die den ersten Ortsbereich eingrenzen; (e) selektives Wechseln zwischen einer Anzeige des wenigstens einen primären Strahls und einer Anzeige der sekundären Strahlen an der Zieloberfläche,
**dadurch gekennzeichnet, dass** die Unterteilungsmittel (113A) von einem beweglichen Element (107) gelagert sind und dass der Schritt (e) beinhaltet, das Element zwischen einer ersten Position, in der das Element in dem Pfad des wenigstens einen primären Strahls einen Strahldämpfer präsentiert, und einer zweiten Position zu bewegen, in der das Element in dem Pfad des wenigstens einen primären Strahls die Unterteilungsmittel präsentiert.

20. Verfahren nach Anspruch 19, wobei der Schritt (d) beinhaltet, die sekundären Strahlen aufeinanderfolgend in Richtung auf die Begrenzungsbereiche zu richten.

21. Verfahren nach Anspruch 19 oder 20, wobei der Schritt (d) beinhaltet, die sekundären Strahlen so zu richten, dass ein Muster aus Laserlichtpunkten definiert wird.

22. Verfahren nach Anspruch 19 oder 20, wobei der Schritt (d) beinhaltet, die sekundären Strahlen so zu richten, dass ein Muster mit einer geschlossenen Schleife bzw. einem geschlossenen Kreis aus Laserlicht an der Zieloberfläche definiert wird, wobei die geschlossene Schleife bzw. der geschlossene Kreis den ersten Ortsbereich eingrenzt.

23. Verfahren nach einem der Ansprüche 19 bis 22, wobei der Schritt (c) beinhaltet, den wenigstens einen primären Strahl mittels eines Diffraktionsstrahlteilers (113A) in die sekundären Strahlen aufzuteilen.

24. Verfahren nach Anspruch 23, wobei der Schritt (e) beinhaltet, den Diffraktionsstrahlteiler (113A) in eine Position und aus der Position heraus zu bewegen, in der der Diffraktionsstrahlteiler in dem Pfad des wenigstens einen primären Strahls angeordnet ist.

25. Verfahren nach einem der vorhergehenden Ansprüche, wobei der Schritt (e) beinhaltet, das Element (107) zwischen einer ersten Position, in der das Element in dem Pfad des wenigstens einen primären Strahls eine Öffnung (113) präsentiert, und einer zweiten Position zu bewegen, in der das Element in dem Pfad des wenigstens einen primären Strahls die Unterteilungsmittel (113A) präsentiert.
